(19) Europäisches Patentamt / European Patent Office / Office européen des brevets

(11) **EP 1 950 688 B1**

(12) **FASCICULE DE BREVET EUROPEEN**

(45) Date de publication et mention
de la délivrance du brevet:
**11.08.2010 Bulletin 2010/32**

(51) Int Cl.:
**G06K 9/00** (2006.01)

(21) Numéro de dépôt: **07024097.3**

(22) Date de dépôt: **12.12.2007**

(54) **Procédé de suivi automatique des mouvements de la main dans une séquence d'images**

Verfahren zur automatischen Überwachung der Bewegungen einer Hand in einer Bildsequenz

Method for automatically following the movements of a hand in a sequence of images

(84) Etats contractants désignés:
**DE FR GB**

(30) Priorité: **25.01.2007 FR 0700564**

(43) Date de publication de la demande:
**30.07.2008 Bulletin 2008/31**

(73) Titulaires:
- **STMICROELECTRONICS SA**
  **92120 Montrouge (FR)**
- **STMicroelectronics S.A.**
  **13106 Rousset cedex (FR)**
- **UNIVERSITE PAUL CEZANNE AIX-MARSEILLE III**
  **13628 Aix en Provence Cedex 1 (FR)**

(72) Inventeurs:
- **Martin, Lionel**
  **13790 Peynier (FR)**
- **Conseil, Simon**
  **13380 Plan de Cuques (FR)**
- **Bourennane, Salah**
  **Parc des Pervenches A4**
  **13012 Marseille (FR)**

(74) Mandataire: **de Roquemaurel, Bruno et al**
**OMNIPAT**
**24 Place des Martyrs de la Résistance**
**13100 Aix en Provence (FR)**

(56) Documents cités:
- **RYUJI FUJIKI ET AL: "Real-Time 3D Hand Shape Estimation Based on Inverse Kinematics and Physical Constraints" IMAGE ANALYSIS AND PROCESSING - ICIAP 2005 LECTURE NOTES IN COMPUTER SCIENCE;;LNCS, SPRINGER-VERLAG, BE, vol. 3617, 2005, pages 850-858, XP019018703 ISBN: 3-540-28869-4**
- **XIONG W ET AL: "Model-guided deformable hand shape recognition without positioning aids" PATTERN RECOGNITION, ELSEVIER, KIDLINGTON, GB, vol. 38, no. 10, octobre 2005 (2005-10), pages 1651-1664, XP004988746 ISSN: 0031-3203**
- **MITOME A ET AL: "A comparison of hand shape recognition algorithms" IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003, ANNUAL CONFERENCE OF THE IEEE INDUSTRIAL ELECTRONICS SOCIETY, NEW YORK, NY : IEEE, US, vol. VOL. 3 OF 3. CONF. 29, 2 novembre 2003 (2003-11-02), pages 2261-2265, XP010691422 ISBN: 0-7803-7906-3**
- **TSURUOKA S ET AL: "Extraction of hand region and specification of finger tips from color image" VIRTUAL SYSTEMS AND MULTIMEDIA, 1997. VSMM '97. PROCEEDINGS., INTERNATIONAL CONFERENCE ON GENEVA, SWITZERLAND 10-12 SEPT. 1997, LOS ALAMITOS, CA, USA,IEEE COMPUT. SOC, US, 10 septembre 1997 (1997-09-10), pages 206-211, XP010245646 ISBN: 0-8186-8150-0**
- **JONGSHILL LEE ET AL: "Hand region extraction and gesture recognition from video stream with complex background through entropy analysis" SAN FRANCISCO, CA, USA 1-5 SEPT. 2004, PISCATAWAY, NJ, USA,IEEE, US, 1 septembre 2004 (2004-09-01), page 1516Vol2, XP010775235 ISBN: 0-7803-8439-3**

**Description**

La présente invention concerne le traitement d'image et les interfaces homme / machine permettant de commander un appareil tel qu'un ordinateur.

La présente invention concerne plus particulièrement le suivi en temps réel du mouvement de la main dans un flux d'image fourni par exemple par une caméra vidéo.

Les gestes de la main sont pour l'homme un moyen de communication naturel et intuitif pour interagir avec son environnement. Ces gestes peuvent servir à renforcer la parole, désigner ou manipuler des objets, voire constituer un langage à part entière comme le langage des signes. L'information véhiculée par les gestes de la main s'avère beaucoup plus riche que celle susceptible d'être fournie à l'aide d'un clavier ou d'un dispositif de pointage tel qu'une souris. Il est donc souhaitable d'utiliser les gestes de la main pour commander un appareil tel qu'un ordinateur.

Ainsi, il a déjà été proposé d'utiliser des gants électroniques munis de capteurs fournissant la position de la main et les angles des articulations des doigts. Cependant, de tels gants s'avèrent relativement encombrants et coûteux en raison du nombre de capteurs nécessaires pour déterminer la position des doigts.

Par ailleurs, l'augmentation régulière de la puissance des ordinateurs de bureau et l'apparition de caméras bon marché, permettent d'envisager la réalisation d'un système de reconnaissance en temps réel des gestes de la main, adapté aux ordinateurs de bureau.

Or la reconnaissance des gestes de la main dans une séquence d'images requiert dans un premier temps de localiser les contours de la main dans chaque image de la séquence. A cet effet, certains procédés de l'art antérieur imposent à l'utilisateur de porter un gant de couleur. Toutefois, ces procédés sont très sensibles aux variations de luminosité, aux ombres et aux changements d'image de fond. En outre, le port d'un tel gant s'avère gênant pour l'utilisateur.

La reconnaissance des gestes de la main nécessite dans un second temps de déterminer les caractéristiques posturales de la main localisée dans chaque image, et enfin de suivre les mouvements de la main d'une image à l'autre à partir des caractéristiques posturales.

L'analyse des caractéristiques posturales de la main peut être effectuée par exemple en positionnant sur la main un modèle squelettique. Toutefois, cette technique impose de déterminer précisément le centre de la main. Classiquement, le centre de la main est déterminé en calculant le centre de gravité de la région délimitée par les contours de la main, à partir des moments géométriques. Si la main contient aussi l'avant-bras, le centre de gravité calculé sera décalé vers le centre du bras.

Par ailleurs, le suivi des mouvements de la main est généralement effectué à l'aide d'un modèle qu'il est difficile d'initialiser en faisant des hypothèses sur la configuration de la main.

Le document "Real-Time 3D Hand Shape Estimation Based on Inverse Kinematics and Physical Constants" (Ryuji Fujiki et al., 2005) décrit un procédé d'estimation en temps réel de la forme de la main utilisant un modèle squelettique comprenant la position du poignet et la position de chaque articulation de chaque doigt.

La présente invention a pour but de remédier à tout ou partie des inconvénients exposés précédemment.

Cet objectif est atteint par la prévision d'un procédé de suivi des mouvements de la main dans un flux d'images, comprenant des étapes consistant à :

- recevoir un flux d'images en temps réel,
- localiser dans chaque image du flux d'image reçu un contour de la main délimitant une zone image de la main,
- extraire des caractéristiques posturales de la zone image de la main localisée dans chaque image, et
- déterminer les mouvements de la main dans le flux d'images à partir des caractéristiques posturales extraites de chaque image.

Selon l'invention, l'extraction des caractéristiques posturales de la main dans chaque image comprend une étape de localisation dans la zone image de la main d'un modèle squelettique simplifié comprenant uniquement le centre de la paume de la main, la base et le bout de chacun d'au moins une partie des doigts de la main, et la position du début de l'avant bras.

Selon un mode de réalisation, le centre de la paume de la main est localisé en recherchant un pixel de la zone image de la main le plus éloigné du contour de la main.

Selon un mode de réalisation de l'invention, la localisation du centre de la paume de la main comprend une étape d'application à la zone image de la main d'une transformée en distance qui associe à chaque pixel de la zone image de la main la distance du pixel au pixel du contour de la main le plus proche, le centre de la paume de la main étant localisé sur le pixel associé à la plus grande distance.

Selon un mode de réalisation de l'invention, les positions dans l'image des bouts et des bases des doigts de la main sont déterminées en associant à chaque pixel du contour de la main la distance entre le pixel de contour et le pixel du centre de la paume de la main, les bouts des doigts étant localisés sur les pixels de contour de la main associés à des maxima locaux de variations de la distance avec le centre de la paume de la main le long du contour de la main, et les bases des doigts étant localisées à partir des creux entre les doigts qui sont localisés sur les pixels de contour de la main associés à des minima locaux de variations de la distance avec le centre de la paume de la main le long du contour de la main.

Selon un mode de réalisation de l'invention, la base de chaque doigt est localisée au milieu du segment délimité par les deux creux du doigt.

Selon un mode de réalisation de l'invention, la base de chaque doigt est localisée :

- en sélectionnant le creux le plus proche du bout du doigt,
- en recherchant un point du contour de la main situé le plus proche du creux sélectionné, et à la même distance du bout du doigt que le creux sélectionné, et
- en calculant la position de la base du doigt au milieu du segment délimité par le creux sélectionné et le point trouvé.

Selon un mode de réalisation de l'invention, le procédé comprend une étape de recherche du pouce parmi des doigts identifiés par une base et un bout, comprenant le calcul d'un angle entre un vecteur d'avant-bras reliant la position du centre de la paume de la main à une position de l'avant-bras dans l'image de la main, et un vecteur de chaque doigt reliant la base au bout du doigt, le pouce étant le doigt formant le plus grand angle avec le vecteur de l'avant-bras.

Selon un mode de réalisation de l'invention, le procédé comprend une étape de recherche du pouce parmi des doigts identifiés par une base et un bout, comprenant la détermination de la longueur ou la largeur des doigts, le pouce étant le doigt le plus court ou le plus large.

Selon un mode de réalisation de l'invention, la position du début de l'avant bras est déterminée dans chaque image du flux d'image en recherchant le point milieu de pixels contigus du contour de la main les plus éloignés du centre de la paume de la main et des bouts des doigts.

Selon un mode de réalisation de l'invention, la zone image de la main dans chaque image du flux d'image est localisée sur la base de la couleur de la peau de la main.

Selon un mode de réalisation de l'invention, un pixel d'une image du flux d'image appartient à la zone image de la main si ses composantes couleurs Cb, Cr dans l'espace couleur YCbCr vérifient les relations suivantes :

$$77 \leq Cb \leq 127 \text{ et } 133 \leq Cr \leq 173.$$

Selon un mode de réalisation de l'invention, le contour de la main dans chaque image du flux d'image est affiné en calculant une probabilité que chaque pixel de l'image appartienne ou non à la main, et en appliquant un seuil à la probabilité pour obtenir une image binaire constituée de pixels appartenant ou non à la main.

Selon un mode de réalisation de l'invention, la probabilité qu'un pixel i d'une image du flux d'image appartienne à la main est calculée à l'aide de la formule suivante :

$$p(i) = \frac{hskin(i)}{htot(i)}$$

dans laquelle hskin et htot représentent les valeurs d'histogrammes de chrominance à deux dimensions pour les composantes de chrominance Cb, Cr du pixel i, l'histogramme hskin étant établi sur la zone de l'image de la main, et htot étant établi sur toute l'image.

Selon un mode de réalisation de l'invention, un filtrage médian et un étiquetage en composantes connexes sont appliqués successivement à l'image binaire.

Selon un mode de réalisation de l'invention, la localisation dans chaque image du flux d'image reçu d'un contour de la main est limitée à une zone de recherche réduite dans l'image, déterminée en fonction de la position du contour de la main dans une image précédente du flux d'images.

Selon un mode de réalisation de l'invention, les mouvements de la main dans le flux d'images comprennent un mouvement global déterminé à l'aide du déplacement de la position du centre de la paume de la main, et un déplacement de chaque doigt de la main déterminé en appariant chaque position de bout de doigt entre deux images successives par une minimisation de la distance entre chaque position de bout de doigt dans les images successives, chaque bout de doigt ne pouvant être apparié qu'une seule fois entre deux images successives.

L'invention concerne également un dispositif de suivi des mouvements de la main dans un flux d'images, comprenant :

- des moyens pour acquérir un flux d'images en temps réel,
- un module de localisation pour localiser dans chaque image du flux d'image un contour de la main délimitant une zone image de la main,
- un module d'extraction pour extraire des caractéristiques posturales de la zone image de la main localisée dans chaque image, et
- un module de suivi pour déterminer les mouvements de la main dans le flux d'images à partir des caractéristiques posturales extraites de chaque image.

Selon l'invention, le module d'extraction est configuré pour localiser dans la zone de la main un modèle squelettique simplifié comprenant uniquement le centre de la paume de la main, la base et le bout de chacun d'au moins une partie des doigts de la main, et la position du début de l'avant bras.

Selon un mode de réalisation, le centre de la paume de la main est localisé dans la zone image de la main, en recherchant un pixel de la zone image de la main le plus éloigné du contour de la main.

Selon un mode de réalisation de l'invention, le module d'extraction est configuré pour appliquer à la zone image de la main une transformée en distance qui associe à chaque pixel de la zone image de la main la distance du pixel au pixel du contour de la main le plus proche, le centre de la paume de la main étant localisé sur le pixel associé à la plus grande distance.

Selon un mode de réalisation de l'invention, le module d'extraction est configuré pour déterminer les positions dans l'image des bouts et des bases des doigts de la main en associant à chaque pixel du contour de la main la distance entre le pixel de contour et le pixel du centre de la paume de la main, les bouts des doigts étant localisés sur les pixels de contour de la main associés à des maxima locaux de variations de la distance avec le centre de la paume de la main le long du contour de la main, et les bases des doigts étant localisées à partir des creux entre les doigts qui sont localisés sur les pixels de contour de la main associés à des minima locaux de variations de la distance avec le centre de la paume de la main le long du contour de la main.

Selon un mode de réalisation de l'invention, le module d'extraction est configuré pour déterminer la position de la base de chaque doigt dans la zone image de la main en recherchant le milieu du segment délimité par les deux creux du doigt.

Selon un mode de réalisation de l'invention, le module d'extraction est configuré pour déterminer la position de la base de chaque doigt en sélectionnant le creux le plus proche du bout du doigt, en recherchant un point du contour de la main situé le plus proche du creux sélectionné, et à la même distance du bout du doigt que le creux sélectionné, et en calculant la position de la base du doigt au milieu du segment délimité par le creux sélectionné et le point trouvé.

Selon un mode de réalisation de l'invention, le module d'extraction est configuré pour rechercher le pouce parmi des doigts identifiés par une base et un bout, en calculant un angle entre un vecteur d'avant-bras reliant la position du centre de la paume de la main à une position de l'avant-bras dans l'image de la main, et un vecteur de chaque doigt reliant la base au bout du doigt, le pouce étant le doigt formant le plus grand angle avec le vecteur de l'avant-bras.

Selon un mode de réalisation de l'invention, le module d'extraction est configuré pour rechercher le pouce parmi des doigts identifiés par une base et un bout, en déterminant la longueur ou de l'épaisseur des doigts, le pouce étant le doigt le plus court ou le plus large.

Selon un mode de réalisation de l'invention, le module d'extraction est configuré pour déterminer la position du début de l'avant bras en recherchant le point milieu de pixels contigus du contour de la main les plus éloignés du centre de la paume de la main et des bouts des doigts.

Selon un mode de réalisation de l'invention, le module de localisation est configuré pour localiser la zone image de la main dans chaque image du flux d'image sur la base de la couleur de la peau de la main.

Selon un mode de réalisation de l'invention, le module de localisation est configuré pour affiner le contour de la main dans chaque image du flux d'image en calculant la probabilité que chaque pixel de l'image appartienne ou non à la main, et en appliquant un seuil à la probabilité pour obtenir une image binaire constituée de pixels appartenant ou non à la main.

Selon un mode de réalisation de l'invention, le module de localisation est configuré pour appliquer successivement à l'image binaire un filtrage médian et un étiquetage en composantes connexes.

Selon un mode de réalisation de l'invention, le module de localisation est configuré pour localiser le contour de la main dans une zone de recherche réduite, déterminée en fonction de la position du contour de la main dans une image précédente du flux d'images.

Selon un mode de réalisation de l'invention, le module de suivi des mouvements de la main est configuré pour déterminer un mouvement global de la main à l'aide du déplacement de la position du centre de la paume de la main, et déterminer un déplacement de chaque doigt de la main en appariant chaque position de bout de doigt entre deux images successives par une minimisation de la distance entre chaque position de bout de doigt dans les images successives, chaque bout de doigt ne pouvant être apparié qu'une seule fois entre deux images successives.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :

- la figure 1 représente sous forme de blocs un système de suivi des mouvements de la main selon l'invention,
- les figures 2a, 2b et 2c sont des images de la main, illustrant un procédé d'extraction des contours de la main dans une image,
- les figures 3a, 3b, 3c et 3d sont des exemples d'images de cartes de distance obtenues à partir d'images de contour de la main, conformément au procédé selon l'invention,
- les figures 4a, 4b sont des images de contours de la main, illustrant un procédé d'application d'un modèle squelettique au contour de la main selon l'invention,
- la figure 5 est une courbe de distance des points du contour de la main avec le centre de la main,
- la figure 6 est une vue partielle d'une image de contour illustrant la détermination de l'articulation de base d'un doigt.

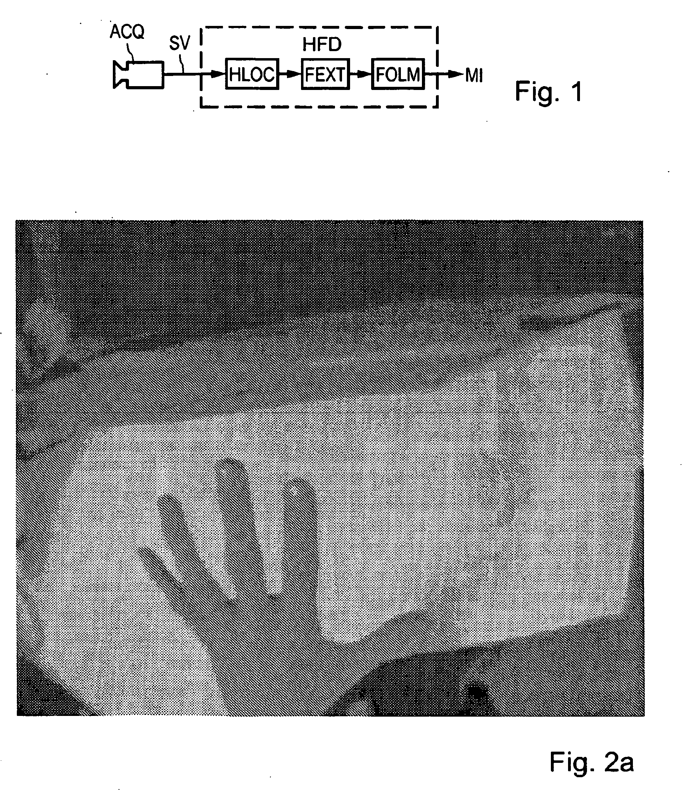

La figure 1 représente un système de suivi de la main HFD selon l'invention. Le système HFD comprend un module d'extraction du contour de la main HLOC recevant en temps réel un flux d'images numérisées SV d'un système d'acquisition ACQ tel qu'une caméra, un module d'extraction de caractéristiques posturales de la main FEXT, et un module de suivi des mouvements de la main FOLM. Le module FEXT extrait les caractéristiques posturales de la main dans chaque image de contour fournie par le module HLOC. Le module FOLM détermine les mouvements de la main entre chaque image à partir des caractéristiques posturales extraites par le module HLOC et fournit des informations de mouvement de la main MI entre deux images successives.

Les figures 2a à 2c illustrent le traitement effectué par le module HLOC. D'une manière générale, pour extraire les contours d'un objet, il existe deux principales catégories de procédés. Dans les procédés de la première catégorie, l'extraction des contours d'un objet consiste à effectuer une différence d'images entre une image courante dans laquelle l'objet doit être détecté et une image de référence, ou fond d'image ou une image précédente. Ces procédés supposent que la caméra soit fixe, et sont très sensibles aux variations de luminosité, aux ombres et aux changements de fond d'image.

Dans les procédés de la seconde catégorie, la détection d'un objet est effectuée à l'aide de la couleur de l'objet par rapport aux couleurs du fond de l'image. La peau humaine s'avère bien localisée dans certains espaces colorimétriques. La détection de contours basée sur la couleur est donc couramment utilisée pour détecter les mains ou le visage. Ainsi, les composantes couleurs Cb et Cr de la peau sont situées dans les plages de valeurs suivantes de l'espace couleur YCbCr :

$$77 \leq Cb \leq 127 \text{ et } 133 \leq Cr \leq 173 \qquad (1)$$

Toutefois, la couleur de la peau varie également en fonction de la luminosité ambiante. En outre, quelle que soit la catégorie du procédé employé, si l'objet à détecter présente une couleur proche de celle d'autres objets présents dans l'image, les contours obtenus par ces procédés intègreront les contours de tous les objets détectés. Les procédés ne prenant en compte que la chrominance sont donc peu performants.

Selon un mode de réalisation de l'invention, la détection des contours de la main dans une image est améliorée en calculant la probabilité p(i) pour que chaque pixel i de chaque image de la séquence, soit un pixel de peau ou du fond de l'image. Cette probabilité peut être calculée de la manière suivante :

$$p(i) = \frac{hskin(i)}{htot(i)} \qquad (2)$$

où hskin(i) et htot(i) représentent les valeurs d'histogrammes de chrominance à deux dimensions pour les composantes de chrominance Cb, Cr du pixel i, l'histogramme hskin étant établi sur la zone de l'image ayant une couleur située dans les plages de composantes couleur définies par les relations (1), et htot étant établi sur toute l'image. Les histogrammes sont avantageusement mis à jour périodiquement afin de prendre en compte les variations de luminosité.

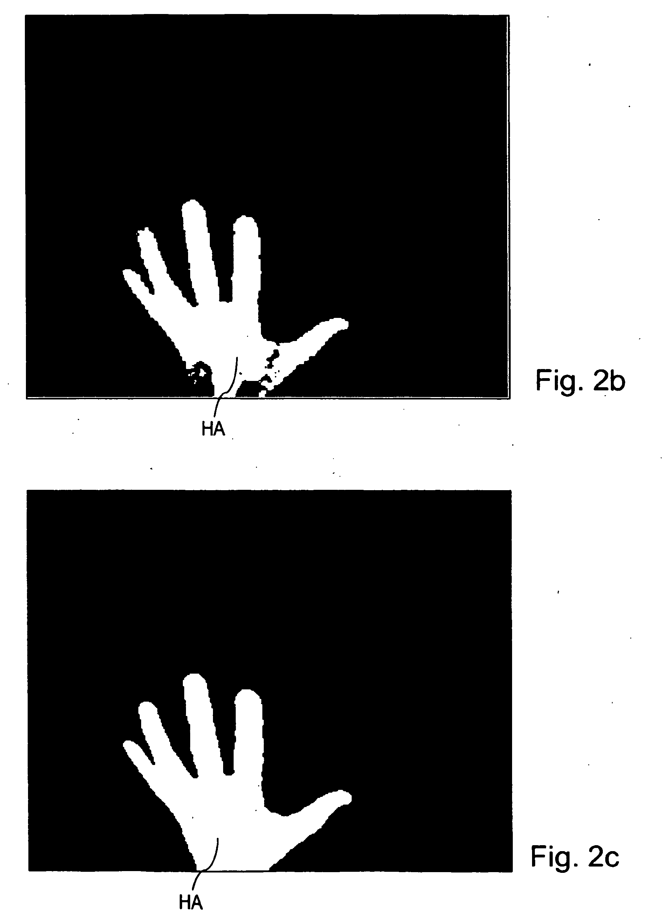

Les contours de la main sont ensuite déterminés en appliquant un seuil à la probabilité p(i) de chaque pixel i de l'image ainsi calculée, ce qui permet d'obtenir un masque binaire, c'est-à-dire une image composée de pixels noirs (= 0) ou blancs (= 1). Les pixels noirs (pixels dont la probabilité p(i) est inférieure au seuil) correspondent au fond de l'image, et les pixels blancs (pixels dont la probabilité p(i) est supérieure au seuil) correspondent à la zone image de la main HA. Le masque binaire de la figure 2b est ainsi obtenu à partir de l'image 2a.

Enfin, un filtre médian peut être appliqué au masque binaire pour éliminer le bruit. Les contours de la main peuvent en outre être affinés par un traitement d'étiquetage en composantes connexes permettant d'éliminer les petites zones de pixels noirs à l'intérieur de zones de pixels blancs et les petites zones de pixels blancs à l'intérieur de zones de pixels noirs. Ainsi, l'image de la figure 2c est obtenue à partir du masque binaire de la figure 2b.

La durée du traitement de localisation du contour de la main peut être réduite en limitant les calculs décrits précédemment à une fenêtre de l'image dans laquelle la main est supposée se trouver, compte tenu de la position de la main dans l'image précédente et/ou du mouvement de la main au cours des images précédentes. A cet effet, le module HLOC effectue une prédiction d'une fenêtre dans laquelle la main est supposée se trouver. A cet effet, il met en oeuvre le modèle de Kalman Standard. Le modèle de Kalman Standard prédit l'état d'un.système à partir des précédentes mesures effectuées sur ce dernier afin de minimiser la matrice de covariance de l'erreur de prédiction.

Le module d'extraction des caractéristiques de la main FEXT effectue une détermination du centre de la main dans chaque image (telle que celle de la figure 2c) fournie par le module HLOC. Ensuite, le module FEXT détermine la configuration de la main dans chaque image en y positionnant un modèle squelettique simplifié de la main.

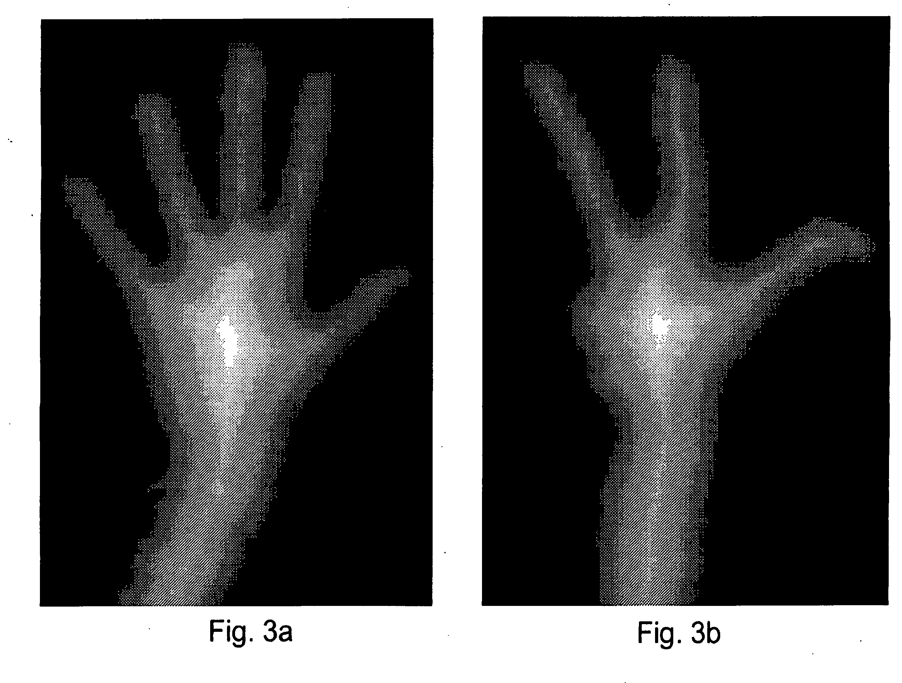

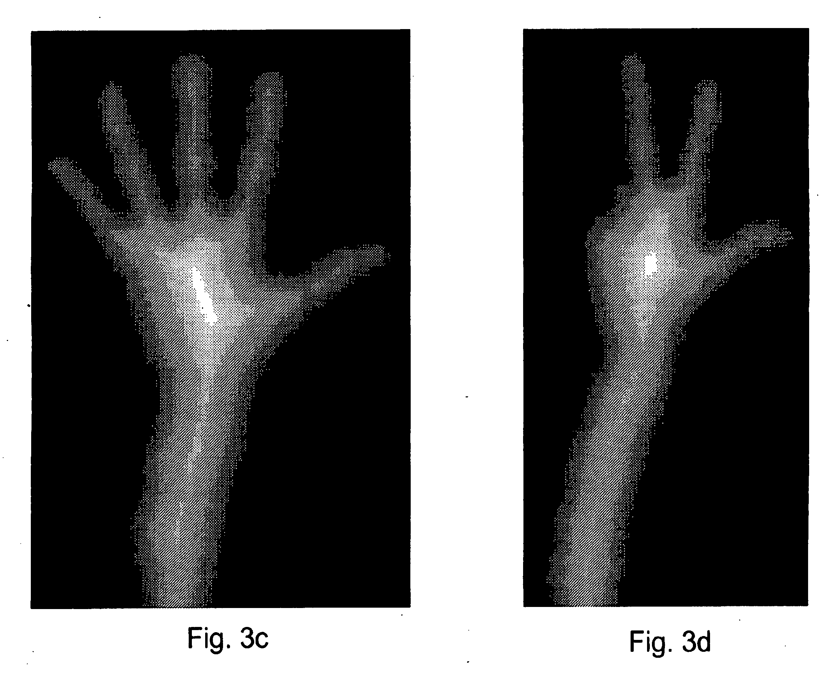

Selon l'invention, la détermination du centre de la main est effectuée en recherchant le pixel de la zone image de la main HA le plus éloigné du contour de la main. Cette opération peut être effectuée en appliquant une transformée de distance aux pixels de chaque image fournie par le module HLOC. La transformée en distance associe à chaque pixel de l'image (figure 2c), la distance du pixel au pixel noir le plus proche, un pixel noir étant associé à une valeur de distance nulle. Cette transformée permet d'obtenir une image de distances en niveaux de gris comme celles des figures 3a à 3d. Plus les pixels de l'image de la figure 2c sont éloignés d'un pixel noir, plus ils sont clairs dans les images des figures 3a à 3d. Ainsi, du fait de la forme de la main, le centre de la paume se trouve à l'emplacement du pixel de l'image de distances ayant la valeur maximum.

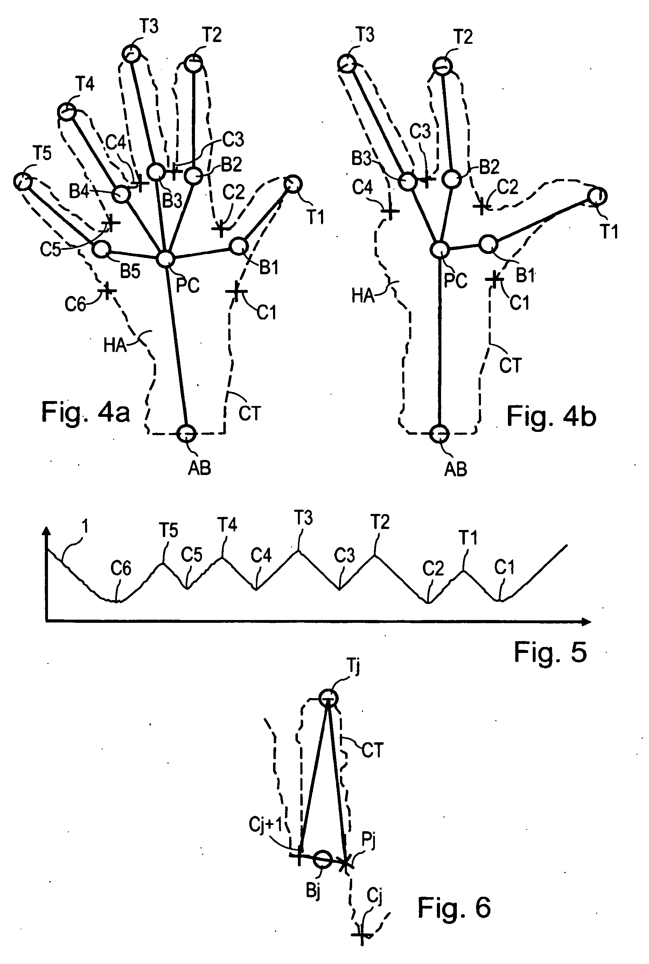

Le modèle squelettique de la main utilisé est représenté sur les figures 4a et 4b. Ce modèle comprend des repères (marqués par des cercles sur les figures 4a, 4b) centrés sur les emplacements du centre de la paume de la main PC, des articulations des bases des doigts détectés B1-B5 (B1, B2, B3 dans la figure 4b), des bouts des doigts détectés T1-T5 (T1, T2, T3 dans la figure 4b), et du début de l'avant bras AB. Dans ce modèle squelettique, le repère du centre de la paume de la main PC est relié par des vecteurs au repère du début de l'avant-bras AB et aux repères des bases des doigts détectés B1-B5 . Chaque doigt j (j variant de 1 à 5 dans le cas de la figure 4a, et de 1 à 3 dans le cas de la figure 4b) comprend un vecteur reliant le repère de sa base Bj au repère de son bout Tj. Les positions des creux entre chaque doigt sont également repérées sur les figures 4a, 4b par des croix C1-C6 (C1-C4 dans la figure 4b) centrées chacune sur la position d'un creux.

La position des repères des bouts des doigts T1-T5 et des creux entre chaque doigt C1-C6 est déterminée en calculant la distance entre chaque pixel du contour de la main CT et le centre de la paume PC. Ainsi, la figure 5 représente une courbe 1 de variation de cette distance le long du contour de la main CT représenté sur la figure 4a. Cette courbe comporte des minima locaux correspondants aux creux C1-C6 entre chaque doigt, et des maxima locaux correspondant aux bouts des doigts T1-T5.

Les bases des doigts B1-B5 sont ensuite localisées dans chaque image à l'aide de la position des repères des creux C1-C6. A cet effet, les deux creux Cj, Cj+1 d'un doigt j sont identifiés en recherchant ceux qui sont le plus proches d'un bout de doigt Tj considéré dans l'image. Les bases des doigts sont ensuite positionnées au milieu des segments [Cj, Cj+1]. Toutefois, ce mode de calcul n'est pas très précis pour certains doigts, et en particulier le pouce dont l'un des creux est mal localisé.

Un autre procédé de localisation de la base d'un doigt est illustré par la figure 6. Ce procédé consiste à sélectionner parmi les deux creux les plus proches Cj, Cj+1 du bout d'un doigt Tj celui qui est plus proche du bout du doigt, à savoir Cj+1 dans l'exemple de la figure 6. Ce procédé consiste ensuite à rechercher le point Pj du contour de la main CT situé le plus proche du creux sélectionné Cj+1, et à la même distance du bout du doigt Tj que le creux sélectionné. La base Bj du doigt est alors positionnée au milieu du segment reliant le creux sélectionné Cj+1 au point trouvé Pj.

Le module FEXT détermine ensuite quel est le doigt correspondant au pouce. A cet effet, le module FEXT applique un test basé sur le calcul de l'angle entre le vecteur de l'avant bras PC-AB et le vecteur de chaque doigt Bj-Tj. Le pouce est le doigt qui présente le plus grand angle entre ces deux vecteurs. D'autres critères de détermination du pouce peuvent également être appliqués alternativement ou en combinaison, comme la comparaison des longueurs des doigts, le pouce étant le doigt le plus court, et/ou des épaisseurs (ou largeurs) des doigts, le pouce étant le doigt le plus épais (ou le plus large). La longueur de chaque doigt j peut être déterminée en calculant la distance Bj-Tj entre les repères de la base et du bout du doigt. La largeur de chaque doigt peut par exemple être obtenue en calculant la distance entre les points du contour de la main CT les plus proches d'un point milieu du segment Bj-Tj, ou bien une valeur moyenne de cette distance le long du segment Bj-Tj.

Il est à noter que si les doigts sont serrés les uns contre les autres, les creux Cj entre les doigts seront très proches des bouts de doigts Tj. Les bases des doigts Bj seront donc également très proches des bouts des doigts. Un seul vecteur de doigt sera positionné dans l'image si les creux des doigts ne sont pas localisés.

La position du repère du début de l'avant bras AB est déterminée en recherchant le point milieu de pixels contigus les plus éloignés du point PC et des bouts des doigts Tj, en utilisant le cas échéant la position du repère AB dans les images précédentes dans le cas où le poing est fermé. Dans le cas où les contours de la main s'étendent jusqu'au bord de l'image, le repère AB est situé au milieu des pixels de bord de l'image appartenant au contour de la main (cas des figures 2c, 4a, 4b).

Le module de suivi des mouvements de la main FOLM utilise le modèle squelettique de la main décrit précédemment, positionné dans chaque image par le module FEXT. Le mouvement global de la main entre deux images successives est déterminé à l'aide du déplacement des repères PC et AB d'une image à l'autre. Ce mouvement global fournit également une estimation de la position des doigts. Le déplacement des doigts est ensuite estimé en appariant chaque repère de doigt Bj, Tj d'une image à l'autre. Cet appariement est effectué par une minimisation de la distance euclidienne entre chaque repère de doigt dans les images successives, chaque repère ne pouvant être apparié qu'une seule fois entre deux images successives. Lorsque les repères d'un doigt dans une image ne correspondent à aucun repère de doigt dans l'image précédente, un nouveau doigt est créé. Lorsque les repères d'un doigt dans une image ne correspondent à aucun repère de doigt dans l'image suivante, le doigt est supprimé. La position du doigt supprimé est gardée en mémoire pendant quelques images de la séquence d'images SV au cas où la disparition du doigt serait temporaire (occlusion, ou erreur de détection).

Le module FOLM fournit des informations de mouvement IM comprenant un vecteur de déplacement entre deux images successives pour chaque repère PC, AB, B1-B5 et T1-T5 du modèle squelettique.

Grâce à l'application d'un modèle squelettique simplifié (localisation des repères caractéristiques de la main PC, AB, T1-T5, B1-B5), le procédé selon l'invention permet de suivre de manière simple et efficace les mouvements d'une main observée par une caméra vidéo. Ainsi, le temps de calcul nécessaire est très faible. Le suivi de la main selon l'invention peut donc être effectué en temps réel par un ordinateur de type PC standard connecté à une caméra vidéo bon marché telle qu'une "webcam".

La localisation du centre de la main PC conformément au procédé selon l'invention est effectuée que l'utilisateur ait ou non le bras nu. La localisation des points caractéristiques de la main est effectuée sans avoir besoin de faire une supposition sur la zone d'entrée de la main et quelles que soient la position et l'orientation de la main dans l'image.

L'invention peut être appliquée à la reconnaissance dynamique de gestes, et en particulier à la localisation précise du bout et de la direction de l'index pour réaliser une interface de commande d'un appareil.

Il apparaîtra clairement à l'homme de l'art que la présente invention est susceptible de diverses variantes de réalisation et d'applications. En particulier, l'invention n'est pas limitée à une localisation des contours de la main basée sur la couleur. Cette localisation peut également être effectuée par une différence avec le fond de l'image, même si ce procédé est moins performant.

La détermination des caractéristiques posturales de la main peut également être effectuée d'autres manières qu'en localisant des points caractéristiques de la main permettant de reconstituer un modèle squelettique. Ainsi, les caractéristiques posturales de la main peuvent consister à rechercher un contour de main proche de celui extrait dans une bibliothèque de contours. Les caractéristiques posturales de la main peuvent également être limitées à la position du centre de la main, et éventuellement du repère de l'avant-bras AB. Le procédé de détermination des mouvements de la main à appliquer dépend de la manière dont les caractéristiques posturales de la main sont définies.

## Revendications

1. Procédé de suivi des mouvements de la main dans un flux d'images, comprenant des étapes consistant à :

   - recevoir un flux d'images (SV) en temps réel,
   - localiser dans chaque image du flux d'image reçu un contour de la main (CT) délimitant une zone image de la main (HA),
   - extraire des caractéristiques posturales de la zone image de la main localisée dans chaque image, et
   - déterminer les mouvements de la main dans le flux d'images à partir des caractéristiques posturales extraites de chaque image,

   **caractérisé en ce que** l'extraction des caractéristiques posturales de la main dans chaque image comprend une étape de localisation dans la zone image de la main (HA) d'un modèle squelettique simplifié comprenant uniquement le centre de la paume de la main (PC), la base (B1-B5) et le bout (T1-T5) de chacun d'au moins une partie des doigts de la main, et la position du début de l'avant bras (AB).

2. Procédé selon la revendication 1, dans lequel le centre de la paume de la main (PC) est localisé en recherchant un pixel de la zone image de la main le plus éloigné du contour de la main (CT).

**3.** Procédé selon la revendication 1 ou 2, dans lequel la localisation du centre de la paume de la main (PC) comprend une étape d'application à la zone image de la main (HA) d'une transformée en distance qui associe à chaque pixel de la zone image de la main la distance du pixel au pixel du contour de la main (CT) le plus proche, le centre de la paume de la main étant localisé sur le pixel associé à la plus grande distance.

**4.** Procédé selon l'une des revendications 1 à 3, dans lequel les positions dans l'image des bouts (T1-T5) et des bases (B1-B5) des doigts de la main sont déterminées en associant à chaque pixel du contour de la main (CT) la distance entre le pixel de contour et le pixel du centre de la paume de la main (PC), les bouts des doigts étant localisés sur les pixels de contour de la main associés à des maxima locaux de variations de la distance avec le centre de la paume de la main le long du contour de la main, et les bases des doigts étant localisées à partir des creux (C1-C6) entre les doigts qui sont localisés sur les pixels de contour de la main associés à des minima locaux de variations de la distance avec le centre de la paume de la main le long du contour de la main.

**5.** Procédé selon la revendication 4, dans lequel la base (Bj) de chaque doigt (j) est localisée au milieu du segment ([Cj, Cj+1]) délimité par les deux creux du doigt.

**6.** Procédé selon la revendication 4, dans lequel la base de chaque doigt (j) est localisée :

   - en sélectionnant le creux (Cj+1) le plus proche du bout du doigt (Tj),
   - en recherchant un point (Pj) du contour de la main (CT) situé le plus proche du creux sélectionné (Cj+1), et à la même distance du bout du doigt (Tj) que le creux sélectionné, et
   - en calculant la position de la base du doigt (Bj) au milieu du segment délimité par le creux sélectionné (Cj+1) et le point trouvé (Pj).

**7.** Procédé selon l'une des revendication 1 à 6, comprenant une étape de recherche du pouce parmi des doigts identifiés par une base (B1-B5) et un bout (T1-T5), comprenant le calcul d'un angle entre un vecteur d'avant-bras reliant la position du centre de la paume de la main (PC) à une position de l'avant-bras (AB) dans l'image de la main, et un vecteur de chaque doigt reliant la base au bout du doigt, le pouce étant le doigt formant le plus grand angle avec le vecteur de l'avant-bras.

**8.** Procédé selon l'une des revendications 1 à 6, comprenant une étape de recherche du pouce parmi des doigts identifiés par une base (B1-B5) et un bout (T1-T5), comprenant la détermination de la longueur ou la largeur des doigts, le pouce étant le doigt le plus court ou le plus large.

**9.** Procédé selon l'une des revendications 1 à 8, dans lequel la position du début de l'avant bras (AB) est déterminée dans chaque image du flux d'image (SV) en recherchant le point milieu de pixels contigus du contour de la main (CT) les plus éloignés du centre de la paume de la main (PC) et des bouts des doigts (T1-T5).

**10.** Procédé selon l'une des revendications 1 à 9, dans lequel la zone image de la main (HA) dans chaque image du flux d'image (SV) est localisée sur la base de la couleur de la peau de la main.

**11.** Procédé selon la revendication 10, dans lequel un pixel d'une image du flux d'image (SV) appartient à la zone image de la main (HA) si ses composantes couleurs Cb, Cr dans l'espace couleur YCbCr vérifient les relations suivantes :

$$77 \leq Cb \leq 127 \text{ et } 133 \leq Cr \leq 173.$$

**12.** Procédé selon la revendication 10 ou 11, dans lequel le contour de la main (CT) dans chaque image du flux d'image (SV) est affiné en calculant une probabilité que chaque pixel de l'image appartienne ou non à la main, et en appliquant un seuil à la probabilité pour obtenir une image binaire constituée de pixels appartenant ou non à la main.

**13.** Procédé selon la revendication 12, dans lequel la probabilité qu'un pixel i d'une image du flux d'image (SV) appartienne à la main est calculée à l'aide de la formule suivante :

$$p(i) = \frac{hskin(i)}{htot(i)}$$

dans laquelle hskin(i) et htot(i) représentent les valeurs d'histogrammes de chrominance à deux dimensions pour les composantes de chrominance Cb, Cr du pixel i, l'histogramme hskin étant établi sur la zone de l'image de la main (HA), et htot étant établi sur toute l'image.

**14.** Procédé selon la revendication 12 ou 13, dans lequel un filtrage médian et un étiquetage en composantes connexes sont appliqués successivement à l'image binaire.

**15.** Procédé selon l'une des revendications 1 à 14, dans lequel la localisation dans chaque image du flux d'image reçu d'un contour de la main (CT) est limitée à une zone de recherche réduite dans l'image, déterminée en fonction de la position du contour de la main dans une image précédente du flux d'images.

**16.** Procédé selon l'une des revendications 1 à 15, dans lequel les mouvements de la main dans le flux d'images comprennent un mouvement global déterminé à l'aide du déplacement de la position du centre de la paume de la main (PC), et un déplacement de chaque doigt de la main déterminé en appariant chaque position de bout de doigt (Tj) entre deux images successives par une minimisation de la distance entre chaque position de bout de doigt dans les images successives, chaque bout de doigt ne pouvant être apparié qu'une seule fois entre deux images successives.

**17.** Dispositif de suivi des mouvements de la main dans un flux d'images, comprenant :

- des moyens (ACQ) pour acquérir un flux d'images (SV) en temps réel,
- un module de localisation (HLOC) pour localiser dans chaque image du flux d'image un contour de la main (CT) délimitant une zone image de la main (HA),
- un module d'extraction (FEXT) pour extraire des caractéristiques posturales de la zone image de la main localisée dans chaque image, et
- un module de suivi (FOLM) pour déterminer les mouvements de la main dans le flux d'images à partir des caractéristiques posturales extraites de chaque image,

**caractérisé en ce que** le module d'extraction (FEXT) est configuré pour localiser dans la zone de la main (HA) un modèle squelettique simplifié comprenant uniquement le centre de la paume de la main (PC), la base (B1-B5) et le bout (T1-T5) de chacun d'au moins une partie des doigts de la main, et la position du début de l'avant bras (AB).

**18.** Dispositif selon la revendication 17, dans lequel le centre de la paume de la main (PC) est localisé dans la zone image de la main (HA), en recherchant un pixel de la zone image de la main le plus éloigné du contour de la main (CT).

**19.** Dispositif selon la revendication 17 ou 18, dans lequel le module d'extraction (FEXT) est configuré pour appliquer à la zone image de la main (HA) une transformée en distance qui associe à chaque pixel de la zone image de la main la distance du pixel au pixel du contour de la main (CT) le plus proche, le centre de la paume de la main étant localisé sur le pixel associé à la plus grande distance.

**20.** Dispositif selon l'une des revendications 17 à 19, dans lequel le module d'extraction (FEXT) est configuré pour déterminer les positions dans l'image des bouts (T1-T5) et des bases (B1-B5) des doigts de la main en associant à chaque pixel du contour de la main (CT) la distance entre le pixel de contour et le pixel du centre de la paume de la main (PC), les bouts des doigts étant localisés sur les pixels de contour de la main associés à des maxima locaux de variations de la distance avec le centre de la paume de la main le long du contour de la main, et les bases des doigts étant localisées à partir des creux (C1-C6) entre les doigts qui sont localisés sur les pixels de contour de la main associés à des minima locaux de variations de la distance avec le centre de la paume de la main le long du contour de la main.

**21.** Dispositif selon la revendication 20, dans lequel le module d'extraction (FEXT) est configuré pour déterminer la position de la base (Bj) de chaque doigt (j) dans la zone image de la main (HA) en recherchant le milieu du segment ([Cj, Cj+1]) délimité par les deux creux du doigt.

**22.** Dispositif selon la revendication 20, dans lequel le module d'extraction (FEXT) est configuré pour déterminer la position de la base de chaque doigt (j) :

- en sélectionnant le creux (Cj+1) le plus proche du bout du doigt (Tj),
- en recherchant un point (Pj) du contour de la main (CT) situé le plus proche du creux sélectionné (Cj+1), et à la même distance du bout du doigt (Tj) que le creux sélectionné, et
- en calculant la position de la base du doigt (Bj) au milieu du segment délimité par le creux sélectionné (Cj+1) et le point trouvé (Pj).

**23.** Dispositif selon l'une des revendications 17 à 22, dans lequel le module d'extraction (FEXT) est configuré pour rechercher le pouce parmi des doigts identifiés par une base (B1-B5) et un bout (T1-T5), en calculant un angle entre un vecteur d'avant-bras reliant la position du centre de la paume de la main (PC) à une position de l'avant-bras (AB) dans l'image de la main, et un vecteur de chaque doigt reliant la base au bout du doigt, le pouce étant le doigt formant le plus grand angle avec le vecteur de l'avant-bras.

**24.** Dispositif selon l'une des revendications 17 à 22, dans lequel le module d'extraction (FEXT) est configuré pour rechercher le pouce parmi des doigts identifiés par une base (B1-B5) et un bout (T1-T5), en déterminant la longueur ou l'épaisseur des doigts, le pouce étant le doigt le plus court ou le plus large.

**25.** Dispositif selon l'une des revendications 17 à 24, dans lequel le module d'extraction (FEXT) est configuré pour déterminer la position du début de l'avant bras (AB) en recherchant le point milieu de pixels contigus du contour de la main (CT) les plus éloignés du centre de la paume de la main (PC) et des bouts des doigts (T1-T5).

**26.** Dispositif selon l'une des revendications 17 à 25, dans lequel le module de localisation (HLOC) est configuré pour localiser la zone image de la main (HA) dans chaque image du flux d'image (SV) sur la base de la couleur de la peau de la main.

**27.** Dispositif selon la revendication 26, dans lequel un pixel d'une image du flux d'image (SV) appartient à la zone image de la main (HA) si ses composantes couleurs Cb, Cr dans l'espace couleur YCbCr vérifient les relations suivantes :

$$77 \leq Cb \leq 127 \text{ et } 133 \leq Cr \leq 173.$$

**28.** Dispositif selon la revendication 26 ou 27, dans lequel le module de localisation (HLOC) est configuré pour affiner le contour de la main (CT) dans chaque image du flux d'image (SV) en calculant une probabilité que chaque pixel de l'image appartienne ou non à la main, et en appliquant un seuil à la probabilité pour obtenir une image binaire constituée de pixels appartenant ou non à la main.

**29.** Dispositif selon la revendication 28, dans lequel la probabilité qu'un pixel i d'une image du flux d'image (SV) appartienne à la main est calculée à l'aide de la formule suivante :

$$p(i) = \frac{hskin(i)}{htot(i)}$$

dans laquelle hskin(i) et htot(i) représentent les valeurs d'histogrammes de chrominance à deux dimensions pour les composantes de chrominance Cb, Cr du pixel i, l'histogramme hskin étant établi sur la zone de l'image de la main (HA), et htot étant établi sur toute l'image.

**30.** Dispositif selon la revendication 28 ou 29, dans lequel le module de localisation (HLOC) est configuré pour appliquer successivement à l'image binaire un filtrage médian et un étiquetage en composantes connexes.

**31.** Dispositif selon l'une des revendications 17 à 30, dans lequel le module de localisation (HLOC) est configuré pour localiser le contour de la main (CT) dans une zone de recherche réduite, déterminée en fonction de la position du contour de la main dans une image précédente du flux d'images.

**32.** Dispositif selon l'une des revendications 17 à 31, dans lequel le module de suivi des mouvements de la main (FOLM) est configuré pour déterminer un mouvement global de la main à l'aide du déplacement de la position du centre de la paume de la main (PC), et pour déterminer un déplacement de chaque doigt de la main en appariant chaque position de bout de doigt (Tj) entre deux images successives par une minimisation de la distance entre chaque position de bout de doigt dans les images successives, chaque bout de doigt ne pouvant être apparié qu'une seule fois entre deux images successives.

**Claims**

1.  A method of following hand movements in an image stream, comprising steps of:

    - receiving an image stream (SV) in real time,
    - locating in each image of the image stream received a contour of the hand (CT) delimiting an image zone of the hand (HA),
    - extracting postural characteristics from the image zone of the hand located in each image, and
    - determining the hand movements in the image stream from the postural characteristics extracted from each image,

    **characterized in that** the extraction of the postural characteristics of the hand in each image comprises a step of locating in the image zone of the hand (HA) a simplified skeletal model comprising only the center of the palm of the hand (PC), the base (B1-85) and the tip (T1-T5) of each of at least one part of the fingers of the hand, and the position of the start of the forearm (AB) .

2.  Method according to claim 1, wherein the center of the palm of the hand (PC) is located by searching for a pixel in the image zone of the hand the furthest from the contour of the hand (CT).

3.  Method according to claim 1 or 2, wherein the locating of the center of the palm of the hand (PC) comprises a step of applying to the image zone of the hand (HA) a distance transform which associates with each pixel in the image zone of the hand the distance of the pixel to the closest pixel of the contour of the hand (CT), the center of the palm of the hand being located on the pixel associated with the greatest distance.

4.  Method according to one of claims 1 to 3, wherein the positions in the image of the tips (T1-T5) and the bases (B1-B5) of the fingers of the hand are determined by associating with each pixel of the contour of the hand (CT) the distance between the contour pixel and the pixel of the center of the palm of the hand (PC), the tips of the fingers being located on the hand contour pixels associated with local maxima variations in the distance to the center of the palm of the hand along the contour of the hand, and the bases of the fingers being located from the hollows (C1-C6) between the fingers that are located on the hand contour pixels associated with local minima variations in the distance to the center of the palm of the hand along the contour of the hand.

5.  Method according to claim 4, wherein the base (Bj) of each finger (j) is located in the middle of the segment ([Cj, Cj+1]) delimited by the two hollows of the finger.

6.  Method according to claim 4, wherein the base of each finger (j) is located:

    - by selecting the hollow (Cj+1) the closest to the fingertip (Tj),
    - by searching for a point (Pj) of the contour of the hand (CT) located the closest to the selected hollow (Cj+1), and the same distance from the fingertip (Tj) as the selected hollow, and
    - by calculating the position of the base of the finger (Bj) in the middle of the segment delimited by the selected hollow (Cj+1) and the point found (Pj).

7.  Method according to one of claims 1 to 6, comprising a step of searching for the thumb out of fingers identified by a base (B1-B5) and a tip (T1-T5), comprising calculating an angle between a forearm vector linking the position of the center of the palm of the hand (PC) to a position of the forearm (AB) in the image of the hand, and a vector of each finger linking the base to the tip of the finger, the thumb being the finger forming the widest angle with the vector of the forearm.

8.  Method according to one of claims 1 to 6, comprising a step of searching for the thumb out of fingers identified by a base (B1-85) and a tip (T1-T5), comprising determining the length or the width of the fingers, the thumb being the shortest or the widest finger.

9.  Method according to one of claims 1 to 8, wherein the position of the start of the forearm (AB) is determined in each image of the image stream (SV) by searching for the mid-point of contiguous pixels of the contour of the hand (CT) the furthest from the center of the palm of the hand (PC) and from the fingertips (T1-T5).

10. Method according to one of claims 1 to 9, wherein the image zone of the hand (HA) in each image of the image stream (SV) is located on the basis of the color of the skin of the hand.

11. Method according to claim 10, wherein a pixel of an image of the image stream (SV) belongs to the image zone of the hand (HA) if its color components Cb, Cr in the color space YCbCr confirm the following relations:

$$77 \leq Cb \leq 127 \text{ and } 133 \leq Cr \leq 173.$$

12. Method according to claim 10 or 11, wherein the contour of the hand (CT) in each image of the image stream (SV) is refined by calculating a probability that each pixel of the image belongs or not to the hand, and by applying a threshold to the probability to obtain a binary image consisting of pixels belonging or not to the hand.

13. Method according to claim 12, wherein the probability that a pixel i of an image of the image stream (SV) belongs to the hand is calculated using the following formula:

$$p(i) = \frac{hskin(i)}{htot(i)}$$

wherein hskin(i) and htot(i) represent the values of two-dimensional chrominance histograms for the chrominance components Cb, Cr of the pixel i, the histogram hskin being established on the zone of the image of the hand (HA), and htot being established on the entire image.

14. Method according to claim 12 or 13, wherein median filtering and connected component labeling are successively applied to the binary image.

15. Method according to one of claims 1 to 14, wherein the locating in each image of the image stream received of a contour of the hand (CT) is limited to a reduced search zone in the image, determined according to the position of the contour of the hand in a previous image of the image stream.

16. Method according to one of claims 1 to 15, wherein the hand movements in the image stream comprise a global movement determined using the displacement of the position of the center of the palm of the hand (PC), and a displacement of each finger of the hand determined by matching each fingertip (Tj) position between two successive images by a minimization of the distance between each fingertip position in the successive images, it being possible to match each fingertip only once between two successive images.

17. A device for following hand movements in an image stream, comprising:

- means (ACQ) for acquiring an image stream (SV) in real time,
- a locating module (HLOC) for locating in each image of the image stream a contour of the hand (CT) delimiting an image zone of the hand (HA),
- an extraction module (FEXT) for extracting postural characteristics from the image zone of the hand located in each image, and
- a following module (FOLM) for determining the hand movements in the image stream from the postural characteristics extracted from each image,

**characterized in that** the extraction module (FEXT) is configured for locating in the zone of the hand (HA) a simplified skeletal model comprising only the center of the palm of the hand (PC), the base (B1-B5) and the tip (T1-T5) of each of at least one part of the fingers of the hand, and the position of the start of the forearm (AB).

18. Device according to claim 17, wherein the center of the palm of the hand (PC) is located in the image zone of the hand (HA), by searching for a pixel in the image zone of the hand the furthest from the contour of the hand (CT).

**19.** Device according to claim 17 or 18, wherein the extraction module (FEXT) is configured for applying to the image zone of the hand (HA) a distance transform which associates with each pixel in the image zone of the hand the distance of the pixel to the closest pixel of the contour of the hand (CT), the center of the palm of the hand being located on the pixel associated with the greatest distance.

**20.** Device according to one of claims 17 to 19, wherein the extraction module (FEXT) is configured for determining the positions in the image of the tips (T1-T5) and the bases (B1-B5) of the fingers of the hand by associating with each pixel of the contour of the hand (CT) the distance between the contour pixel and the pixel of the center of the palm of the hand (PC), the tips of the fingers being located on the hand contour pixels associated with local maxima variations in the distance to the center of the palm of the hand along the contour of the hand, and the bases of the fingers being located from the hollows (C1-C6) between the fingers that are located on the hand contour pixels associated with local minima variations in the distance to the center of the palm of the hand along the contour of the hand.

**21.** Device according to claim 20, wherein the extraction module (FEXT) is configured for determining the position of the base (Bj) of each finger (j) in the image zone of the hand (HA) by searching for the middle of the segment ([Cj, Cj+1]) delimited by the two hollows of the finger.

**22.** Device according to claim 20, wherein the extraction module (FEXT) is configured for determining the position of the base of each finger (j):

- by selecting the hollow (Cj+1) the closest to the fingertip (Tj),
- by searching for a point (Pj) of the contour of the hand (CT) located the closest to the selected hollow (Cj+1), and the same distance from the fingertip (Tj) as the selected hollow, and
- by calculating the position of the base of the finger (Bj) in the middle of the segment delimited by the selected hollow (Cj+1) and the point found (Pj).

**23.** Device according to one of claims 17 to 22, wherein the extraction module (FEXT) is configured for searching for the thumb out of fingers identified by a base (B1-B5) and a tip (T1-T5), by calculating an angle between a forearm vector linking the position of the center of the palm of the hand (PC) to a position of the forearm (AB) in the image of the hand, and a vector of each finger linking the base to the tip of the finger, the thumb being the finger forming the widest angle with the vector of the forearm.

**24.** Device according to one of claims 17 to 22, wherein the extraction module (FEXT) is configured for searching for the thumb out of fingers identified by a base (B1-B5) and a tip (T1-T5), by determining the length or the thickness of the fingers, the thumb being the shortest or the widest finger.

**25.** Device according to one of claims 17 to 24, wherein the extraction module (FEXT) is configured for determining the position of the start of the forearm (AB) by searching for the mid-point of contiguous pixels of the contour of the hand (CT) the furthest from the center of the palm of the hand (PC) and from the fingertips (T1-T5).

**26.** Device according to one of claims 17 to 25, wherein the locating module (HLOC) is configured for locating the image zone of the hand (HA) in each image of the image stream (SV) on the basis of the color of the skin of the hand.

**27.** Device according to claim 26, wherein a pixel of an image of the image stream (SV) belongs to the image zone of the hand (HA) if its color components Cb, Cr in the color space YCbCr confirm the following relations:

$$77 \leq Cb \leq 127 \text{ and } 133 \leq Cr \leq 173.$$

**28.** Device according to claim 26 or 27, wherein the locating module (HLOC) is configured for refining the contour of the hand (CT) in each image of the image stream (SV) by calculating a probability that each pixel of the image belongs or not to the hand, and by applying a threshold to the probability to obtain a binary image consisting of pixels belonging or not to the hand.

**29.** Device according to claim 28, wherein the probability that a pixel i of an image of the image stream (SV) belongs to the hand is calculated using the following formula:

$$p(i) = \frac{hskin(i)}{htot(i)}$$

wherein hskin(i) and htot(i) represent the values of two-dimensional chrominance histograms for the chrominance components Cb, Cr of the pixel i, the histogram hskin being established on the zone of the image of the hand (HA), and htot being established on the entire image.

30. Device according to claim 28 or 29, wherein the locating module (HLOC) is configured for successively applying median filtering and connected component labeling to the binary image.

31. Device according to one of claims 17 to 30, wherein the locating module (HLOC) is configured for locating the contour of the hand (CT) in a reduced search zone, determined according to the position of the contour of the hand in a previous image of the image stream.

32. Device according to one of claims 17 to 31, wherein the hand movement following module (FOLM) is configured for determining a global movement of the hand using the displacement of the position of the center of the palm of the hand (PC), and for determining a displacement of each finger of the hand by matching each fingertip (Tj) position between two successive images by a minimization of the distance between each fingertip position in the successive images, it being possible to match each fingertip only once between two successive images.

**Patentansprüche**

1. Verfahren zur Verfolgung der Bewegungen der Hand in einem Bildfluss, das Schritte umfasst, die darin bestehen:

   - einen Bildfluss (SV) in Echtzeit zu empfangen,
   - in jedem Bild des empfangenen Bildflusses einen Handumriss (CT), der eine Bildzone der Hand (HA) abgrenzt, zu lokalisieren,
   - Haltungsmerkmale aus der Bildzone der Hand, die in jedem Bild lokalisiert ist, zu entnehmen und
   - anhand der aus jedem Bild entnommenen Haltungsmerkmale die Bewegungen der Hand im Bildfluss zu bestimmen,

   **dadurch gekennzeichnet, dass** die Entnahme der Haltungsmerkmale der Hand aus jedem Bild einen Schritt der Lokalisierung in der Bildzone der Hand (HA) eines vereinfachten Skelettmodells umfasst, das nur die Mitte des Handtellers (PC), die Wurzel (B1-B5) und die Spitze (T1-T5) von jedem von zumindest einem Teil der Finger der Hand umfasst, sowie die Position des Anfangs des Unterarms (AB).

2. Verfahren nach Anspruch 1, in dem die Mitte des Handtellers (PC) lokalisiert wird, indem ein Pixel der Bildzone der Hand gesucht wird, der am weitesten vom Handumriss (CT) entfernt ist.

3. Verfahren nach Anspruch 1 oder 2, in dem die Lokalisierung der Mitte des Handtellers (PC) einen Schritt der Anwendung an die Bildzone der Hand (HA) von einer Distanztransformierten umfasst, die jedes Pixel der Bildzone der Hand mit der Distanz des Pixels zum Pixel des Handumrisses (CT), der am nächsten ist, verknüpft, wobei die Mitte des Handtellers an dem Pixel lokalisiert ist, der mit der größten Distanz verknüpft ist.

4. Verfahren nach einem der Ansprüche 1 bis 3, in dem die Positionen im Bild der Spitzen (T1-T5) und der Wurzeln (B1-B5) der Finger der Hand bestimmt werden, indem jeder Pixel des Handumrisses (CT) mit der Distanz zwischen dem Pixel des Umrisses und dem Pixel der Mitte des Handtellers (PC) verknüpft wird, wobei die Spitzen der Finger an den Pixels des Handumrisses lokalisiert werden, die mit lokalen Schwankungsmaxima der Distanz zur Mitte des Handtellers am Handumriss entlang verknüpft sind, und wobei die Wurzeln der Finger anhand der Vertiefungen (C1-C6) zwischen den Fingern lokalisiert werden, die an den Pixels des Handumrisses lokalisiert sind, die mit lokalen Schwankungsminima der Distanz zur Mitte des Handtellers am Handumriss entlang verknüpft sind.

5. Verfahren nach Anspruch 4, in dem die Wurzel (Bj) von jedem Finger (j) in der Mitte des Segments ([Cj, Cj+1]) lokalisiert ist, der durch die zwei Vertiefungen des Fingers abgegrenzt ist.

6. Verfahren nach Anspruch 4, in dem die Wurzel von jedem Finger (j) durch folgendes lokalisiert wird:

- die Auswahl der Vertiefung (Cj+1), die der Fingerspitze (Tj) am nächsten ist,
- die Suche nach einem Punkt (Pj) des Handumrisses (CT), der der ausgewählten Vertiefung (Cj+1) am nächsten ist, und in derselben Distanz zur Fingerspitze (Tj) wie die ausgewählte Vertiefung ist, und
- das Berechnen der Position der Fingerwurzel (Bj) in der Mitte des durch die ausgewählte Vertiefung (Cj+1) und den gefundenen Punkt (Pj) abgegrenzten Segments.

7. Verfahren nach einem der Ansprüche 1 bis 6, umfassend einen Schritt der Suche nach dem Daumen unter durch eine Wurzel (B1-B5) und eine Spitze (T1-T5) identifizierten Fingern, umfassend die Berechnung eines Winkels zwischen einem Unterarmvektor, der die Position der Mitte des Handtellers (PC) mit einer Position des Unterarms (AB) im Bild der Hand verbindet, und einem Vektor von jedem Finger, der die Wurzel mit der Fingerspitze verbindet, wobei der Daumen der Finger ist, der den größten Winkel mit dem Vektor des Unterarms bildet.

8. Verfahren nach einem der Ansprüche 1 bis 6, umfassend einen Schritt der Suche nach dem Daumen unter durch eine Wurzel (B1-B5) und eine Spitze (T1-T5) identifizierten Fingern, umfassend die Bestimmung der Länge oder der Dicke der Finger, wobei der Daumen der kürzeste oder dickste Finger ist.

9. Verfahren nach einem der Ansprüche 1 bis 8, in dem die Position des Anfangs des Unterarms (AB) in jedem Bild des Bildflusses (SV) bestimmt wird, indem nach dem Mittelpunkt benachbarter Pixels des Handumrisses (CT) gesucht wird, die am weitesten von der Mitte des Handtellers (PC) und den Spitzen der Finger (T1-T5) entfernt sind.

10. Verfahren nach einem der Ansprüche 1 bis 9, in dem die Bildzone der Hand (HA) in jedem Bild des Bildflusses (SV) anhand der Hautfarbe der Hand lokalisiert wird.

11. Verfahren nach Anspruch 10, in dem ein Pixel eines Bildes des Bildflusses (SV) zu der Bildzone der Hand (HA) gehört, wenn seine Farbkomponenten Cb, Cr im Farbraum YCbCr folgende Relationen aufweisen:

$$77 \leq Cb \leq 127 \text{ und } 133 \leq Cr \leq 173.$$

12. Verfahren nach Anspruch 10 oder 11, in dem der Handumriss (CT) in jedem Bild des Bildflusses (SV) verfeinert wird, indem eine Wahrscheinlichkeit berechnet wird, dass jedes Pixel des Bildes zu der Hand gehört oder nicht, und indem eine Schwelle an die Wahrscheinlichkeit angewandt wird, um ein binares Bild zu erhalten, das sich aus Pixels zusammen setzt, die zu der Hand gehören oder nicht.

13. Verfahren nach Anspruch 12, in dem die Wahrscheinlichkeit, dass ein Pixel i von einem Bild des Bildflusses (SV) der Hand gehört, mit Hilfe der folgenden Formel berechnet wird:

$$p(i) = \frac{hskin(i)}{htot(i)}$$

in der hskin(i) und htot(i) die Werte von zweidimensionalen Farbhistogrammen für die Farbkomponenten Cb, Cr des Pixels i darstellen, wobei das Histogramm hskin an der Zone des Bildes der Hand (HA) erstellt wird und htot am ganzen Bild erstellt wird.

14. Verfahren nach Anspruch 12 oder 13, in dem eine Medianfilterung und eine Markierung von Zusammenhangskomponenten sukzessiv an das binare Bild angewandt werden.

15. Verfahren nach einem der Ansprüche 1 bis 14, in dem die Lokalisierung in jedem Bild des empfangenen Bildflusses von einem Handumriss (CT) auf eine reduzierte Suchzone im Bild begrenzt ist, die in Abhängigkeit von der Position des Handumrisses in einem vorhergehenden Bild des Bildflusses bestimmt wird.

16. Verfahren nach einem der Ansprüche 1 bis 15, in dem die Bewegungen der Hand im Bildfluss eine Gesamtbewegung, die mit Hilfe der Verschiebung der Position der Mitte des Handtellers (PC) bestimmt wird, und eine Verschiebung von jedem Finger der Hand, die bestimmt wird, indem jede Fingerspitzenposition (Tj) zwischen zwei sukzessiven Bildern durch eine Minimierung der Distanz zwischen jeder Fingerspitzenposition in den sukzessiven Bildern gepaart wird, wobei jede Fingerspitze nur einmal zwischen zwei sukzessiven Bildern gepaart werden kann, umfassen.

17. Vorrichtung zur Verfolgung der Bewegungen der Hand in einem Bildfluss, die folgendes umfasst:

- Mittel (ACQ) zum Erfassen eines Bildflusses (SV) in Echtzeit,
- ein Lokalisierungsmodul (HLOC) zum Lokalisieren in jedem Bild des Bildflusses eines Handumrisses (CT), der eine Bildzone der Hand (HA) abgrenzt,
- ein Entnahmemodul (FEXT) zum Entnehmen von Haltungsmerkmale aus der Bildzone der Hand, die in jedem Bild lokalisiert ist, und
- ein Verfolgungsmodul (FOLM) zum Bestimmen der Bewegungen der Hand im Bildfluss anhand der Haltungsmerkmale, die aus jedem Bild entnommen werden,

**dadurch gekennzeichnet, dass** das Entnahmemodul (FEXT) konfiguriert ist, um in der Zone der Hand (HA) ein vereinfachtes Skelettmodell zu lokalisieren, das nur die Mitte des Handtellers (PC), die Wurzel (B1-B5) und die Spitze (T1-T5) von jedem von zumindest einem Teil der Finger der Hand umfasst, sowie die Position des Anfangs des Unterarms (AB).

18. Vorrichtung nach Anspruch 17, in dem die Mitte des Handtellers (PC) in der Bildzone der Hand (HA) lokalisiert wird, indem ein Pixel der Bildzone der Hand gesucht wird, der am weitesten vom Handumriss (CT) entfernt ist.

19. Vorrichtung nach Anspruch 17 oder 18, in dem das Entnahmemodul (FEXT) konfiguriert ist, um an die Bildzone der Hand (HA) eine Distanztransformierte anzuwenden, die jedes Pixel der Bildzone der Hand mit der Distanz des Pixels zum Pixel des Handumrisses (CT), der am nächsten ist, verknüpft, wobei die Mitte des Handtellers an dem Pixel lokalisiert ist, der mit der größten Distanz verknüpft ist.

20. Vorrichtung nach einem der Ansprüche 17 bis 19, in dem das Entnahmemodul (FEXT) konfiguriert ist, um die Positionen im Bild der Spitzen (T1-T5) und der Wurzeln (B1-B5) der Finger der Hand zu bestimmen, indem jeder Pixel des Handumrisses (CT) mit der Distanz zwischen dem Pixel des Umrisses und dem Pixel der Mitte des Handtellers (PC) verknüpft wird, wobei die Spitzen der Finger an den Pixels des Handumrisses lokalisiert werden, die mit lokalen Schwankungsmaxima der Distanz zur Mitte des Handtellers am Handumriss entlang verknüpft sind, und wobei die Wurzeln der Finger anhand der Vertiefungen (C1-C6) zwischen den Fingern lokalisiert werden, die an den Pixels des Handumrisses lokalisiert sind, die mit lokalen Schwankungsminima der Distanz zur Mitte des Handtellers am Handumriss entlang verknüpft sind.

21. Vorrichtung nach Anspruch 20, in dem das Entnahmemodul (FEXT) konfiguriert ist, um die Position der Wurzel (Bj) von jedem Finger (j) in der Bildzone der Hand (HA) zu bestimmen, indem die Mitte des Segments ([Cj, Cj+1]), das durch die zwei Vertiefungen des Fingers abgegrenzt ist, gesucht wird.

22. Vorrichtung nach Anspruch 20, in dem das Entnahmemodul (FEXT) konfiguriert ist, um durch folgendes die Position der Wurzel von jedem Finger (j) zu bestimmen:

- die Auswahl der Vertiefung (Cj+1), die der Fingerspitze (Tj) am nächsten ist,
- die Suche nach einem Punkt (Pj) des Handumrisses (CT), der der ausgewählten Vertiefung (Cj+1) am nächsten ist, und in derselben Distanz zur Fingerspitze (Tj) wie die ausgewählte Vertiefung ist, und
- das Berechnen der Position der Fingerwurzel (Bj) in der Mitte des durch die ausgewählte Vertiefung (Cj+1) und den gefundenen Punkt (Pj) abgegrenzten Segments.

23. Vorrichtung nach einem der Ansprüche 17 bis 22, in dem das Entnahmemodul (FEXT) konfiguriert ist, um unter durch eine Wurzel (B1-B5) und eine Spitze (T1-T5) identifizierten Fingern nach dem Daumen zu suchen, indem ein Winkel zwischen einem Unterarmvektor, der die Position der Mitte des Handtellers (PC) mit einer Position des Unterarms (AB) im Bild der Hand verbindet, und einem Vektor von jedem Finger, der die Wurzel mit der Fingerspitze verbindet, berechnet wird, wobei der Daumen der Finger ist, der den größten Winkel mit dem Vektor des Unterarms bildet.

24. Vorrichtung nach einem der Ansprüche 17 bis 22, in dem das Entnahmemodul (FEXT) konfiguriert ist, um unter durch eine Wurzel (B1-B5) und eine Spitze (T1-T5) identifizierten Fingern nach dem Daumen zu suchen, indem die Länge oder die Dicke der Finger bestimmt wird, wobei der Daumen der kürzeste oder dickste Finger ist.

25. Vorrichtung nach einem der Ansprüche 17 bis 24, in dem das Entnahmemodul (FEXT) konfiguriert ist, um die Position des Anfangs des Unterarms (AB) zu bestimmen, indem nach dem Mittelpunkt benachbarter Pixels des Handumrisses (CT) gesucht wird, die am weitesten von der Mitte des Handtellers (PC) und den Spitzen der Finger (T1-T5) entfernt sind.

**26.** Vorrichtung nach einem der Ansprüche 17 bis 25, in dem das Lokalisierungsmodul (HLOC) konfiguriert ist, um die Bildzone der Hand (HA) in jedem Bild des Bildflusses (SV) anhand der Hautfarbe der Hand zu lokalisieren.

**27.** Vorrichtung nach Anspruch 26, in dem ein Pixel eines Bildes des Bildflusses (SV) zu der Bildzone der Hand (HA) gehört, wenn seine Farbkomponenten Cb, Cr im Farbraum YCbCr folgende Relationen aufweisen:

$$77 \leq Cb \leq 127 \text{ und } 133 \leq Cr \leq 173.$$

**28.** Vorrichtung nach Anspruch 26 oder 27, in dem das Lokalisierungsmodul (HLOC) konfiguriert ist, um den Handumriss (CT) in jedem Bild des Bildflusses (SV) zu verfeinern, indem eine Wahrscheinlichkeit berechnet wird, dass jedes Pixel des Bildes zu der Hand gehört oder nicht, und indem eine Schwelle an die Wahrscheinlichkeit angewandt wird, um ein binares Bild zu erhalten, das sich aus Pixels zusammen setzt, die zu der Hand gehören oder nicht.

**29.** Vorrichtung nach Anspruch 28, in dem die Wahrscheinlichkeit, dass ein Pixel i von einem Bild des Bildflusses (SV) der Hand gehört, mit Hilfe der folgenden Formel berechnet wird:

$$p(i) = \frac{hskin(i)}{htot(i)}$$

in der hskin(i) und htot(i) die Werte von zweidimensionalen Farbhistogrammen für die Farbkomponenten Cb, Cr des Pixels i darstellen, wobei das Histogramm hskin an der Zone des Bildes der Hand (HA) erstellt wird und htot am ganzen Bild erstellt wird.

**30.** Vorrichtung nach Anspruch 28 oder 29, in dem das Lokalisierungsmodul (HLOC) konfiguriert ist, um eine Medianfilterung und eine Markierung von Zusammenhangskomponenten sukzessiv an das binare Bild anzuwenden.

**31.** Vorrichtung nach einem der Ansprüche 17 bis 30, in dem das Lokalisierungsmodul (HLOC) konfiguriert ist, um den Handumriss (CT) in einer reduzierten Suchzone zu lokalisieren, die in Abhängigkeit von der Position des Handumrisses in einem vorhergehenden Bild des Bildflusses bestimmt wird.

**32.** Vorrichtung nach einem der Ansprüche 17 bis 31, in dem das Verfolgungsmodul der Bewegungen der Hand (FOLM) konfiguriert ist, um eine Gesamtbewegung der Hand mit Hilfe der Verschiebung der Position der Mitte des Handtellers (PC) zu bestimmen, und um eine Verschiebung von jedem Finger der Hand zu bestimmen, indem jede Fingerspitzenposition (Tj) zwischen zwei sukzessiven Bildern durch eine Minimierung der Distanz zwischen jeder Fingerspitzenposition in den sukzessiven Bildern gepaart wird, wobei jede Fingerspitze nur einmal zwischen zwei sukzessiven Bildern gepaart werden kann.

Fig. 1

Fig. 2a

Fig. 2b

HA

Fig. 2c

HA

Fig. 3b

Fig. 3a

Fig. 3d

Fig. 3c

Fig. 4a

Fig. 4b

Fig. 5

Fig. 6